(19) Europäisches Patentamt
European Patent Office
Office européen des brevets

(11) Veröffentlichungsnummer: **0 197 289 A2**

(12) # EUROPÄISCHE PATENTANMELDUNG

(21) Anmeldenummer: **86102721.7**

(22) Anmeldetag: **01.03.86**

(51) Int. Cl.[4]: **C 01 B 17/04**

(30) Priorität: **04.03.85 DE 3507617**

(43) Veröffentlichungstag der Anmeldung:
**15.10.86 Patentblatt 86/42**

(84) Benannte Vertragsstaaten:
**DE GB**

(71) Anmelder: **SALZGITTER LUMMUS GMBH**
**Abraham Lincoln Strasse 1**
**D-6200 Wiesbaden(DE)**

(72) Erfinder: **Anghelescu, Doina**
**Otto-Witte-Strasse 36**
**D-6200 Wiesbaden(DE)**

(72) Erfinder: **Lothholz, Klaus**
**Kantstrasse 20**
**D-6204 Taunusstein 1(DE)**

(74) Vertreter: **Reitzner, Bruno, Dr. et al,**
**Patentanwälte Dipl.-Ing. R. Splanemann Dr. B. Reitzner**
**Tal 13**
**D-8000 München 2(DE)**

(54) **Verfahren zum Reinigen der Abgase von Claus-Anlagen und zur Wiedergewinnung der in diesen Abgasen enthaltenen Schwefelverbindungen.**

(57) Verfahren zum Reinigen der Abgase von Clause-Anlagen und zur Wiedergewinnung der in diesen Abgasen enthaltenen Schwefelverbindungen als Elementarschwefel durch

(a) Hydrierung des in den Abgasen enthaltenen Schwefels bzw. der sauerstoffhaltigen Schwefelverbindungen und/oder des Schwefelkohlenstoffs zu Schwefelwasserstoff;
(b) Abscheidung des im Abgas enthaltenen und des bei der Hydrierung gebildeten Wassers;
(c) Abtrennung des Schwefelwasserstoffs; und
(d) Gewinnung von Elementarschwefel aus dem abgetrennten Schwefelwasserstoff;

das Verfahren ist dadurch gekennzeichnet, daß man die Abtrennung des Schwefelwasserstoffs mit Hilfe von für Schwefelwasserstoff selektiv durchlässigen Membranen durchführt und den abgetrennten Schwefelwasserstoff in die Clause-Anlage zurückleitet.

FIG. 1

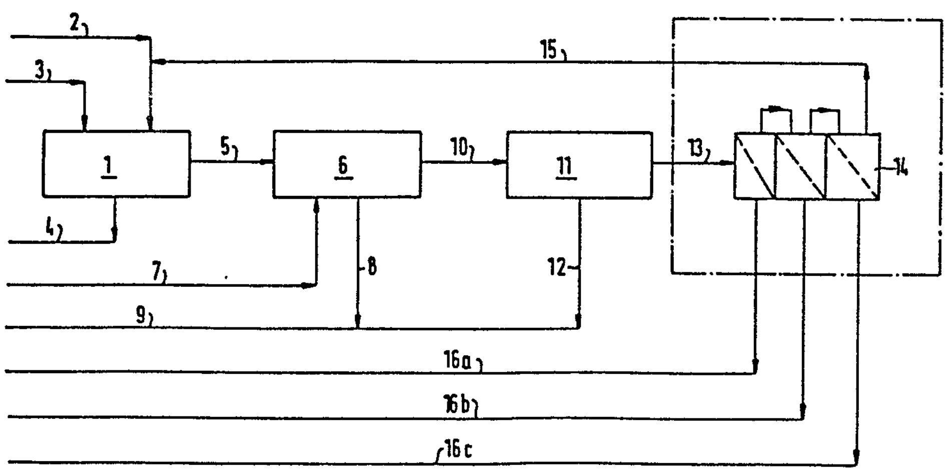


EP 0 197 289 A2

Croydon Printing Company Ltd

Verfahren zum Reinigen der Abgase von Claus-Anlagen und zur Wiedergewinnung der in diesen Abgasen enthaltenen Schwefelverbindungen.

Die Erfindung betrifft ein Verfahren zum Reinigen der Abgase von Claus-Anlagen und zur Wiedergewinnung der in diesen Abgasen enthaltenen Schwefelverbindungen als Elementarschwefel.

Bei einem bekannten Verfahren dieser Gattung, dem sogenannten SCOT-Prozeß (vgl. z.B. Ullmanns Encyclopädie der Technischen Chemie, Band 21, 1982, Seiten 13 bis 18) werden die in den Abgasen (dem sogenannten Tailgas) enthaltenen Schwefelkomponenten, d.h. Elementarschwefel, sauerstoffhaltige Schwefelverbindungen und/oder Schwefelkohlenstoff, zu Schwefelwasserstoff hydriert. Das im Abgas enthaltene Wasser und das bei der Hydrierung gebildete Wasser wird hinter dem Reduktionsreaktor durch Kühlen auskondensiert und als Kondensat entfernt. Dann wird der Schwefelwasserstoff dadurch abgetrennt, daß das trockene Prozeßgas mit einer Aminlösung behandelt wird, in welcher der Schwefelwasserstoff selektiv absorbiert wird. Als Amine verwendet man je nach dem $CO_2$-Gehalt des Prozeßgases beispielsweise Monoethanolamin, Diethanolamin, Methyldiethanolamin (MDEA), Diisopropanolamin (DIPA) oder Triethanolamin. Das gereinigte Prozeßgas wird gewöhnlich über eine Nachbrennkammer in die Atmosphäre geleitet. Der in der Absorberflüssigkeit gelöste Schwefelwasserstoff wird mit Dampf desorbiert und zusammen mit dem ebenfalls gelösten Kohlendioxid zur Gewinnung von Elementarschwefel wieder in die Claus-Anlage zurückgeleitet.

Dieses Verfahren hat den Nachteil, daß die Desorptionsanlage hohe Betriebsmittel- (Dampf) und Investitionskosten erfordert. Letztere erreichen größenordnungsmäßig die Kosten einer kompletten Claus-Anlage. Diese Kosten

sind besonders hoch, wenn in der Anlage keine weiteren Wäschen mit DIPA oder MDEA betrieben werden, so daß zusätzlich ein Laugetank und ein Entleerungssystem mit den entsprechenden Pumpen und dergl. erforderlich sind.

Außerdem muß die Absorptionsflüssigkeit regeneriert werden.

Der Erfindung liegt die Aufgabe zugrunde, die Abtrennung des Schwefelwasserstoffes aus dem hydrierten und getrockneten Tailgas auf eine einfachere und kostengünstigere Weise durchzuführen, als es mit Hilfe der bekannten Desorptionsanlage möglich ist. Diese Aufgabe wird erfindungsgemäß dadurch gelöst, daß man die Abtrennung des Schwefelwasserstoffs mit Hilfe von für Schwefelwasserstoff selektiv durchlässigen Membranen durchführt und den abgetrennten Schwefelwasserstoff in die Claus-Anlage zurückleitet.

Die Anwendung von selektiv durchlässigen Membranen zur Entfernung von Schwefelwasserstoff aus den direkt anfallenden Tailgasen einer Claus-Anlage ist nicht möglich. Diese Gase enthalten im allgemeinen folgende Komponenten: $N_2$, $CO_2$, $H_2O$, $H_2$, $SO_2$, $H_2S$, COS, $CS_2$ und S-Dämpfe. Um den Schwefelwasserstoff mittels einer selektiv durchlässigen Membran zu entfernen, müssen die Tailgase verdichtet und gekühlt werden. Dieser Vorgang würde folgende Begleiterscheinungen mit sich bringen.

Das durch Kühlung und Verdichtung kondensierte Wasser löst $H_2S$ und $SO_2$, wobei $H_2S$ und $SO_2$ unter Bildung von kolloidalem Schwefel reagieren können. Dieser Schwefel geht mit dem Abwasser verloren und belastet die Abwasser-Kläranlagen. Ferner kann $SO_2$ mit $H_2O$ und $H_2S$ unter Bildung einer sehr korrosiven Mischung von Säuren und Sulfiden reagieren. Weiterhin kondensieren die Schwefeldämpfe und ergeben eine feine und fast

unmöglich trennbare Emulsion von Schwefel in Wasser, wodurch Ablagerungen und Verstopfungen in den Rohren und anderen Apparateteilen verursacht werden. Schließlich können COS und $CS_2$ von den Abgasen nicht getrennt werden und müssen im Nachverbrennungsofen zu $SO_2$ verbrannt werden, das dann in die Atmosphäre geleitet werden muß.

Erst durch die erfindungsgemäße Kombination von Verfahrensschritten unter Vorschaltung einer Hydrierung und der Entfernung des im Abgas enthaltenen und bei der Hydrierung gebildeten Wassers ist die Abtrennung des Schwefelwasserstoffs durch die selektiv durchlässigen Membranen möglich.

Zur Entfernung des Wassers wird das hydrierte Abgas abgekühlt, wobei ein Teil des im Abgas enthaltenen Wasserdampfes auskondensiert und abgetrennt wird. Dann wird das hydrierte Abgas verdichtet, vorzugsweise auf etwa 10 bis 150 bar, und nochmals abgekühlt. Hierbei kondensiert nochmals Wasser aus, das ebenfalls abgetrennt wird. Der Restwasserdampfgehalt liegt je nach der Kühltemperatur und Druck unter 15 g $H_2O/Nm^3$ Abgas, vorzugsweise unter 5 g $H_2O/Nm^3$ Abgas

Ein Teil des Schwefelwasserstoffs wird in dem kondensierten Wasser gelöst. Dieser Schwefelwasserstoff kann aber in dem der Claus-Anlage vorgeschalteten Sauerwasserstripper zurückgewonnen und ebenfalls in die Claus-Anlage eingeleitet werden. Das $H_2S$-freie Wasser kann anschließend zum Abwassernetz geleitet werden.

Das hydrierte, verdichtete und weitgehend von Wasser befreite Abgas kann problemlos durch die selektiv durchlässigen Membranen hindurchgepreßt werden.

Da die Hydrierung gemäß Stufe (a) im allgemeinen mit einem geringen Wasserstoffüberschuß durchgeführt wird, enthält der abgetrennte Schwefelwasserstoff noch Wasserstoff, ebenso das gereinigte Abgas. Letzteres kann, je nach der $H_2S$-Konzentration, in einem Nachverbrennungsofen behandelt werden, um die noch verbleibenden $H_2S$-Spuren in $SO_2$ umzusetzen und den Wasserstoff zu verbrennen.

Das hydrierte und weitgehend von Wasser befreite Abgas wird vorzugsweise bei einer Temperatur von etwa 20 bis 100°C durch die selektiv durchlässigen Membranen hindurchgepreßt.

Als Membranmaterialien kommen die üblicherweise verwendeten Membranmaterialien infrage, vorzugsweise Celluloseacetat, Polyolefine, Polysulfone, fluorierte Polymere oder Silikongummi.

Es kann eine ein- oder mehrstufige Membrananordnung verwendet werden. Vorzugsweise verwendet man eine mehrstufige Membrananordnung, in welcher die einzelnen Stufen parallel, in Reihe oder in Kaskade angeordnet sind.

Das erfindungsgemäße Verfahren wird durch das allgemeine Verfahrensschema von Fig. 1 erläutert.

In einer Claus-Anlage 1 wird das durch die Leitung 2 einströmende Sauergas in an sich bekannter Weise mit der durch die Leitung 3 einströmenden Luft umgesetzt, wobei Schwefel gebildet wird, der durch die Leitung 4 abgeführt wird. Die Abgase der Claus-Anlage (Tailgas) werden durch die Leitung 5 in die kombinierte Hydrier- und Wasserabtrenn-Anlage 6 geleitet. Die Abgase enthalten im wesentlichen $H_2S$, $SO_2$, organische Schwefelverbindungen, wie COS und $CS_2$ sowie $H_2$, CO, $CO_2$, $H_2O$, $N_2$ und Schwefeldämpfe. Der zur Hydrierung erforderliche Wasserstoff wird durch die Leitung 7 eingeführt. Das im Abgas enthaltene und das bei der Hydrierung gebildete Sauerwasser wird durch die Leitung 8 in eine Sammelleitung 9 abgeführt und kann durch Fraktionierung von dem gelösten Schwefelwasserstoff befreit werden, der

in die Claus-Anlage 1 zurückgeleitet wird (nicht dargestellt). Nach der kombinierten Hydrier- und Wasserabtrennanlage gelangt das hydrierte Tailgas über die Leitung 10 in den Verdichter 11, der mit einer nachgeschalteten Kühleinrichtung versehen ist. Auf diese Weise wird das restliche Wasser aus dem hydrierten Tailgas auskondensiert und gelangt über die Leitung 12 in die Sammelleitung 9. Das hydrierte und von Wasser befreite schwefelwasserstoffhaltige Tailgas gelangt über die Leitung 13 in eine mehrstufige Membrananordnung 14 mit in Reihe geschalteten Stufen, in denen die selektiv durchlässigen Membranen durch gestrichelte Linien angedeutet sind. Das $H_2S$-reiche Gas wird durch die Leitung 15 in die Claus-Anlage 1 zurückgeführt, während die von $H_2S$ ganz oder teilweise befreiten Abgase durch die Leitungen 16a,16b und 16c (die auch zu einer Sammeleitung vereinigt werden können) in die Atmosphäre abgeleitet werden, bzw. einem Nachverbrennungsofen zugeführt oder als Zwischenprodukt im Kreislauf zurück zu einer $H_2S$-Wäsche geführt werden.

Eine weitere Ausführungsform einer mehrstufigen Membrananordnung ist in Fig. 2 dargestellt. Diese besteht aus sechs Stufen, wobei die Stufen 14a bis 14c bzw. 14a' bis 14c' jeweils in Reihe geschaltet sind. Diese beiden Stufenreihen sind ihrerseits wieder parallel geschaltet. Das schwefelwasserstoffhaltige trockene Tailgas tritt durch die Leitung 13 ein. Das mit Schwefelwasserstoff angereicherte Gas (Permeat) tritt durch die Leitung 15 aus, während das Abgas durch die Leitung 16 austritt.

Eine weitere Ausführungsform (zweistufige Kaskade) zeigt die Fig. 3. Das schwefelwasserstoffhaltige trockene Tailgas tritt durch die Leitung 13 in die Stufe 14a ein und wird dort in ein Abgas (schwaches Nicht-Permeat), das durch die Leitung 16 abfließt und in ein mit Schwefelwasserstoff angereichertes Permeat aufgetrennt, welches in die Stufe 14b fließt. Dort wird dieses Gas in ein stark mit Schwefelwasserstoff angereichertes Permeat, das durch die Leitung 15 austritt und in ein Zwischenproduktgas, das durch die Leitung 17 austritt, aufgetrennt. Das Zwischenproduktgas kann wieder in die erste Stufe zurückgeführt werden.

Bei der Ausführungsform nach Fig. 4 sind zwei in Reihe geschaltete Stufen 14a und 14b vorgesehen. Das trockene Tailgas tritt durch die Leitung 13 in die Stufe 14a ein und wird dort in ein mit Schwefelwasserstoff angereichertes Permeat, das durch die Leitung 15 austritt, und ein Nicht-Permeat aufgetrennt, das in die Stufe 14b eintritt. Hier erfolgt eine Auftrennung in ein schwaches Nicht-Permeat,

das durch die Leitung 16 in die Atmosphäre geführt wird, und in ein Zwischenprodukt-Permeat, das durch die Leitung 17 abgeführt wird und das in die erste Stufe zurückgeleitet werden kann.

Je nach dem verwendeten Membranmaterial ist die Reihenfolge der Abnahme der Permeationsraten der im Tailgas enthaltenen Komponenten wie folgt:

$H_2O$, $H_2$, $H_2S$, $CO_2$, CO, $N_2$.

Wesentlich bei dem vorliegenden Verfahren ist einerseits eine ausreichende Trennung zwischen $H_2S$ und $CO_2$ bzw. $N_2$, so daß der Aufbau eines großen Kreislaufstromes vermieden wird, und andererseits eine maximale Senkung des $H_2S$-Gehalts im Tailgas und damit verbunden eine Verminderung der Umweltbelastung.

Die Schwefelrückgewinnung läßt sich erfindungsgemäß auf mindestens 99 % der im Einsatzgas zur Claus-Anlage enthaltenen Menge an Schwefelverbindungen erhöhen.

Die Betriebsparameter des erfindungsgemäßen Verfahrens sind im allgemeinen wie folgt:

Einsatzgas-Bedingungen:

| | | |
|---|---|---|
| Druck (abs.), | bar | 10- 150 |
| Temperatur, | °C | 20 - 100 |
| $H_2S$-Gehalt, | Vol.-% | 15 - min.1 |

Permeat-Bedingungen:

| | | |
|---|---|---|
| Druck (abs.), | bar | atm. - 5 |
| Temperatur, | °C | 20 - 100 |
| $H_2S$-Gehalt, | Vol.-% | 20 bis 95 |

Nicht-Permeat

| | | |
|---|---|---|
| Druck (abs.), | bar | 10 - 130 |
| Temperatur, | °C | 20 - 100 |
| $H_2S$-Gehalt, | Vol.-% | max. 0,4. |

PATENTANSPRÜCHE

1. Verfahren zum Reinigen der Abgase von Claus-Anlagen und zur Wiedergewinnung der in diesen Abgasen enthaltenen Schwefelverbindungen als Elementarschwefel durch

(a) Hydrierung des in den Abgasen enthaltenden Schwefels bzw. der sauerstoffhaltigen Schwefelverbindungen und/oder des Schwefelkohlenstoffs zu Schwefelwasserstoff;

(b) Abscheidung des im Abgas enthaltenen und des bei der Hydrierung gebildeten Wassers;

(c) Abtrennung des Schwefelwasserstoffs; und

(d) Gewinnung von Elementarschwefel aus dem abgetrennten Schwefelwasserstoff,

dadurch gekennzeichnet, daß man die Abtrennung des Schwefelwasserstoffs mit Hilfe von für Schwefelwasserstoff selektiv durchlässigen Membranen durchführt und den abgetrennten Schwefelwasserstoff in die Claus-Anlage zurückleitet.

2. Verfahren nach Anspruch 1, dadurch gekennzeichnet, daß man das von Schwefelwasserstoff weitgehend befreite Abgas einer Nachverbrennung unterzieht.

3. Verfahren nach Anspruch 1 oder 2, dadurch gekennzeichnet, daß man das hydrierte Abgas abkühlt, den auskondensierten Teil des im Abgas enthaltenen Wasserdampfes abtrennt, das Abgas vorzugsweise auf etwa 10 bis 150 bar verdichtet, erneut abkühlt und das hierbei auskondensierte Wasser bis auf einen Restwasserdampfgehalt von unter etwa 16 g $H_2O/Nm^3$ Abgas, vorzugsweise von unter etwa 5g $H_2O/Nm^3$ Abgas, entfernt.

4. Verfahren nach einem der Ansprüche 1 bis bis, dadurch gekennzeichnet, daß man das hydrierte und weitgehend von Wasser befreite Abgas bei einer Temperatur von etwa 20 bis 100°C durch eine selektiv durchlässige Membrananordnung hindurchpreßt.

5. Verfahren nach einem der Ansprüche 1 bis 4, dadurch gekennzeichnet, daß man als Membranmaterial Celluloseacetat, Polyolefine, Polysulfone, fluorierte Polymere oder Silicongummi verwendet.

6. Verfahren nach einem der Ansprüche 1 bis 5, dadurch gekennzeichnet, daß man eine einstufige oder mehrstufige Membrananordnung verwendet, in welcher die einzelnen Stufen parallel, in Reihe oder in Kaskade angeordnet sind.

FIG. 1

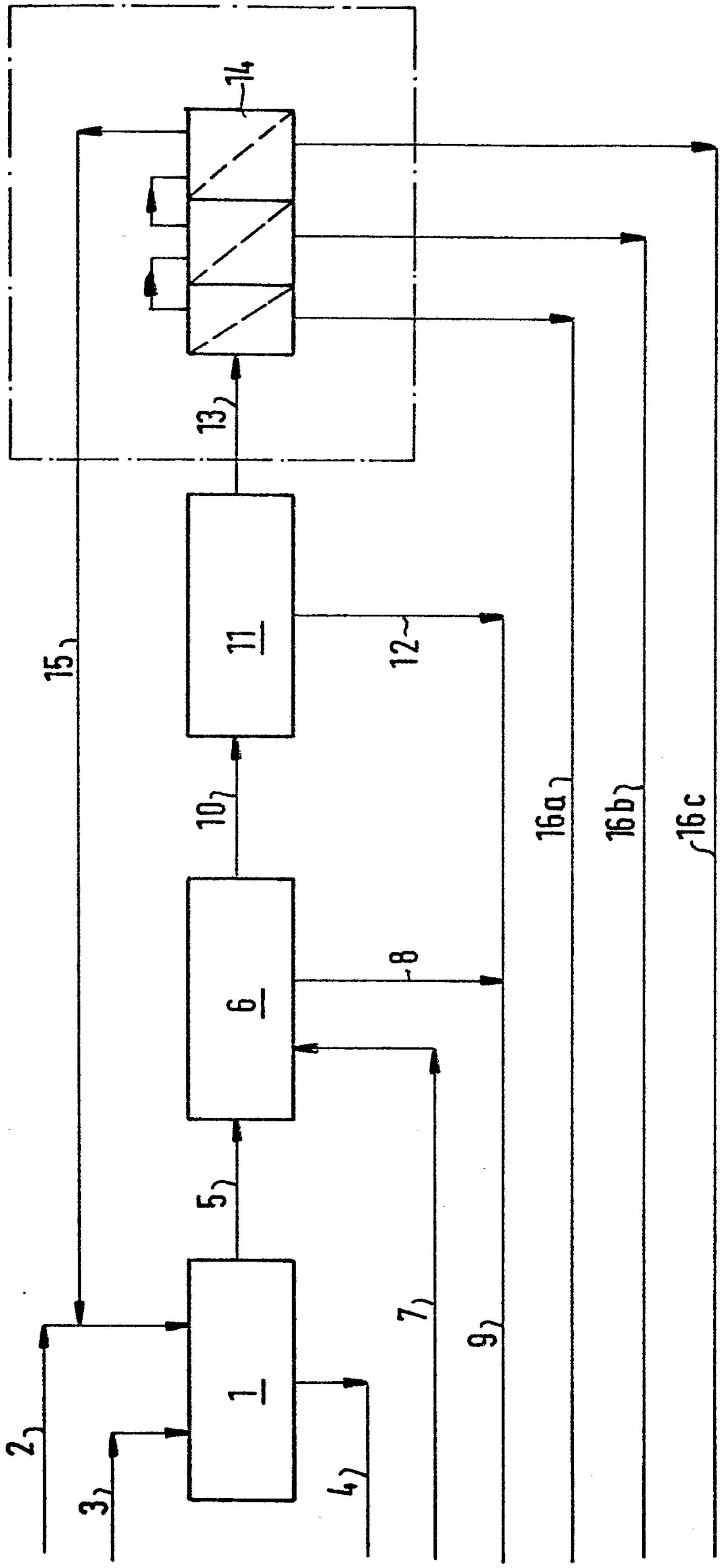

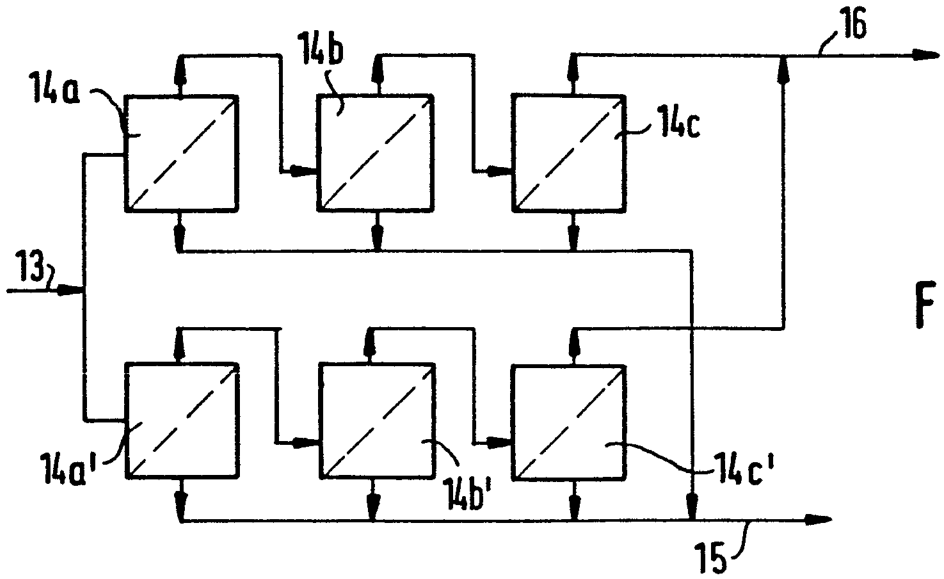


FIG. 2

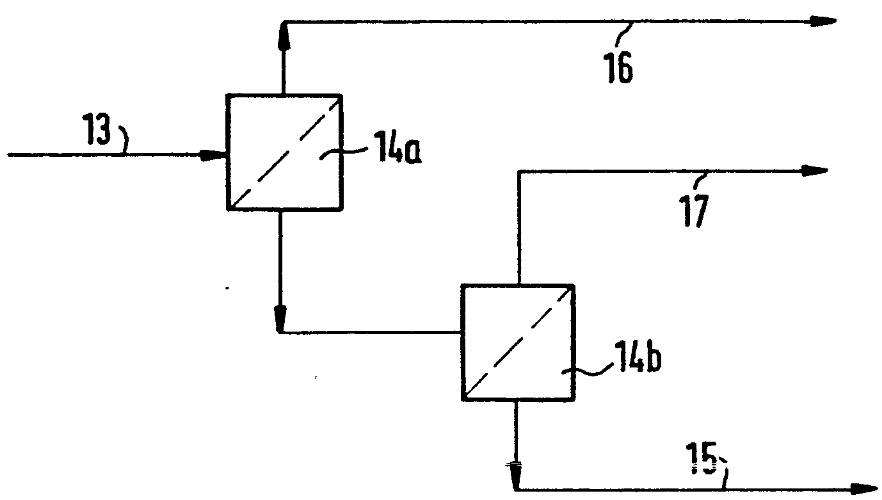


FIG. 3

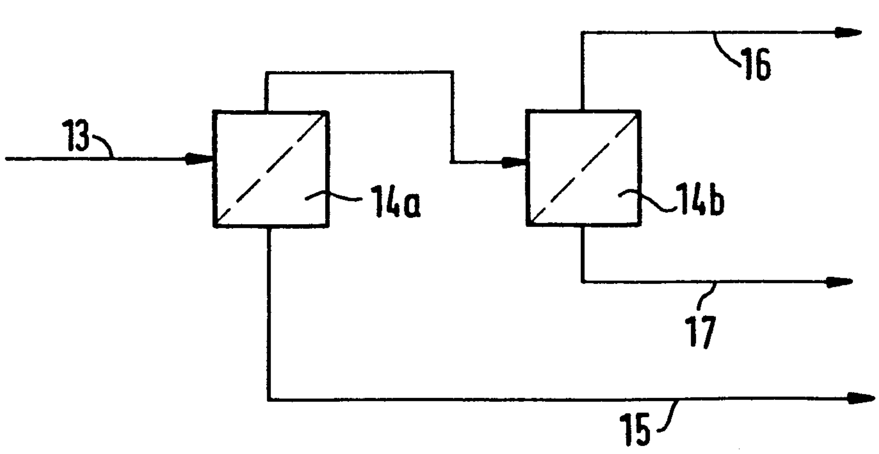


FIG. 4